(19) **Europäisches Patentamt European Patent Office Office européen des brevets**

(11) **EP 1 559 073 B1**

(12) **FASCICULE DE BREVET EUROPEEN**

(45) Date de publication et mention
de la délivrance du brevet:
**12.12.2007 Bulletin 2007/50**

(51) Int Cl.:
***G06T 11/00*** *(2006.01)*

(21) Numéro de dépôt: **03767929.7**

(86) Numéro de dépôt international:
**PCT/FR2003/050089**

(22) Date de dépôt: **14.10.2003**

(87) Numéro de publication internationale:
**WO 2004/036288 (29.04.2004 Gazette 2004/18)**

(54) **PROCEDE DE RECONSTRUCTION D UNE IMAGE A PARTIR D UN JEU DE PROJECTIONS PAR APPLICATION D UNE TRANSFORMEE EN ONDELETTE.**

REKONSTRUKTIONSMETHODE EINES BILDES VON PROJEKTIONSABBILDUNGEN UNTER VERWENDUNG VON WAVELET-TRANSFORMATIONEN

METHOD FOR RECONSTRUCTING AN IMAGE FROM A SET OF PROJECTIONS BY APPLYING A WAVELET TRANSFORM

(84) Etats contractants désignés:
**AT BE BG CH CY CZ DE DK EE ES FI FR GB GR HU IE IT LI LU MC NL PT RO SE SI SK TR**

(30) Priorité: **17.10.2002 FR 0212925**

(43) Date de publication de la demande:
**03.08.2005 Bulletin 2005/31**

(73) Titulaire: **COMMISSARIAT A L'ENERGIE ATOMIQUE**
**75015 Paris (FR)**

(72) Inventeurs:
• **GRANGEAT, Pierre**
**F-38330 SAINT-ISMIER (FR)**
• **RODET, Thomas**
**F-01680 LHUIS (FR)**
• **DESBAT, Laurent**
**F-38000 GRENOBLE (FR)**

(74) Mandataire: **Poulin, Gérard**
**BREVALEX**
**3, rue du Docteur Lancereaux**
**75008 Paris (FR)**

(56) Documents cités:
**WO-A-01/84500**         **FR-A- 2 822 331**
**US-A- 5 841 890**       **US-A- 6 148 110**

**Description**

Le sujet de cette invention est un procédé de reconstruction d'une image à partir de jeux de projections de cette image et en appliquant une transformation en ondelette.

Les procédés de tomographie consistent à examiner un objet inanimé ou un être vivant par un réseau de détecteurs mobiles qui prend une série de vues en tournant autour de lui. Ces vues sont des projections de la propriété permettant d'exprimer l'image (normalement une absorption d'un rayonnement traversant l'objet ou une scintillation d'un corps radioactif ingéré par l'objet), c'est-à-dire des sommes de la propriété le long de lignes traversant l'objet et définies par la collimation des détecteurs. Chaque détecteur mesure une projection de l'image à chaque vue. Quand un nombre suffisant de vues et de projections a été pris, on procède à l'inversion des résultats pour obtenir la valeur de la propriété à chaque point de l'objet ; cette inversion est comparable à l'inversion d'un système d'équations de grandes dimensions et peut s'effectuer ouvertement par des méthodes algébriques, ou, plus fréquemment, par des méthodes analytiques par lesquelles on applique des opérations numériques successives aux projections sans inverser directement le système. Un grand nombre de méthodes existent, parmi lesquelles on citera celle qui est décrite dans le brevet français 2 615 619 qui est le premier de cette équipe de recherche, et le brevet français 2 810 141 plus récent qui présente quelques ressemblances avec le procédé qui sera décrit ici. On peut aussi citer un article de Grass paru dans Phy. Med.Biol, vol.45, p.329, février 2000. Ces opérations aboutissent à ce qu'on appelle la rétroprojection des mesures, c'est-à-dire au calcul de la valeur de la propriété prise à chacun des points de la ligne de la projection.

Il peut être avantageux de travailler avec des résultats exprimés dans le domaine fréquentiel de Fourier, comme le prouve le deuxième document. Des transformées numériques d'autre nature ont aussi été employées.

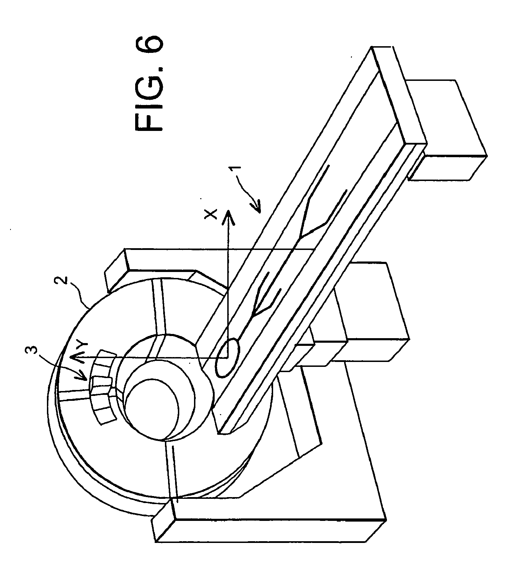

On se reportera aux figures 6, 7 et 8 pour une description concrète et schématique d'un procédé de prise de mesures tomographiques. Une source F de rayonnement et un système de détection 3 sont mobiles le long d'un cadre annulaire 2 à des positions diamétralement opposées, et un rayonnement conique originaire de la source F atteint le système de détection 3 après avoir traversé l'objet 1 à étudier. La pièce essentielle du système de détection 3 est un réseau 4 bidimensionnel de détecteurs 5. Des projections R de l'image tridimensionnelle de l'objet 1 sont mesurées par ceux des détecteurs 5 qui sont inclus dans un pourtour 15 de l'"ombre" de l'objet 1. Un nombre important de vues de ce genre est pris à autant d'angles θ différents d'orientation du réseau 4 des détecteurs 5. Il est fréquemment considéré, conventionnellement pour les calculs, un réseau fictif 4' de détecteurs 5' sur un plan de détection Pdet qui est parallèle au réseau 4 réel et passe par le centre O du cadre 2. Des coordonnées p et q sont définies pour identifier les détecteurs 13 d'après leurs lignes et leurs colonnes. Des calculs de réarrangement, courants dans l'art, permettent de transposer les mesures d'un réseau 4 quelconque au réseau fictif 4' et d'appliquer les algorithmes de reconstruction à celui-ci.

Le brevet français 2 615 619 sera rappelé ici puisqu'il expliquait en détail quelles opérations numériques, notamment celles qui sont dites de filtrage et de rétroprojection, permettent d'obtenir l'image de l'objet à partir de ses projections ; des méthodes différentes existent cependant.

Le problème auquel on s'attaque ici est la réduction du temps ou du volume des calculs pour inverser le système des mesures.

On sait qu'il s'agit d'une des limitations les plus graves dans les procédés de tomographie, et de nombreux procédés nouveaux ont été conçus pour le même objectif que l'invention, dont celui du deuxième brevet cité.

L'idée exposée ici est d'exploiter les propriétés particulières d'une transformée numérique, dite décomposition en ondelette, des projections pour prévoir des emplacements de projections négligeables ou insignifiantes et de ne pas appliquer les calculs d'inversion à ces emplacements. Des perfectionnements offrent encore une plus grande réduction des calculs. Sous sa forme la plus générale, l'invention concerne un procédé de reconstruction d'une image à partir de jeux de projections de cette image, comprenant successivement :

- une série de décompositions successives des jeux de projections en ondelette donnant des imagettes des jeux des projections, comprenant des images d'une approximation (AA) et des séries successives (Dd, Dh, Dv) de détails homologues de chaque jeu,
- dans chacune des séries et successivement pour des imagettes de détails ayant un nombre croissant de points, une recherche de portions insignifiantes jugées pour dépourvues de contenu, et une recherche de portions homothétiques des portions insignifiantes dans chacune des imagettes de détails qui suivent dans la série ;
- des rétroprojections des imagettes des jeux de protection en imagettes de l'image à reconstruire, avec une omission des rétroprojections pour toutes les portions insignifiantes et toutes les portions homothétiques.
- et une combinaison des imagettes à reconstruire par une inversion de décomposition donnant ladite image.

L'ordre des étapes (surtout les rétroprojections précédant la recomposition) est essentiel pour obtenir les avantages de l'invention.

L'art antérieur comprend un exemple de reconstruction d'une image par une décomposition en ondelette (US - 5 953 388 - A), qui cependant est appliquée là pour reconstruire une portion seulement de l'image, en exploitant la propriété de "localité" de la décomposition, qui n'est guère sensible aux autres portions de l'image, qu'on peut ainsi négliger dans les calculs. Le brevet US-5 841 890-A traite d'un sujet analogue et considère divers aspects de la décomposition en ondelette appliquée à la tomographie. La décomposition ne sert pas à accélérer des calculs de rétroprojection pour obtenir une image d'ensemble de façon plus économe en calculs.

On doit enfin mentionner le document US-6 148 110-A qui décrit un procédé à masques numériques analogue à celui de l'invention, mais seulement pour comprimer un signal d'image sans calcul de rétroprojection.

L'invention sera maintenant décrite plus concrètement et complètement en liaison aux figures suivantes:

- la figure 1 illustre une décomposition d'image en ondelette,
- les figures 2, 3 et 4 illustrent certains aspects de l'invention,
- la figure 5 illustre un organigramme résumant une réalisation complète du procédé,
- la figure 6 illustre un dispositif de principe du procédé,
- et les figures 7 et 8 illustrent plus en détail le procédé et certaines rotations employées.

Nous commencerons par exposer la transformation d'un signal par une décomposition en ondelette. Plusieurs modèles d'ondelettes existent, qui ont en commun d'être comparables à un filtre passe-bas. Le signal est séparé en deux portions dont l'une, associée aux basses fréquences, peut être tenue pour une approximation du signal, alors que l'autre, associée aux hautes fréquences, exprime plutôt ses détails. Une propriété des ondelettes est que les portions peuvent contenir chacun une moitié des points du signal si bien qu'il n'y a pas de perte d'information par cette décomposition. La décomposition peut être faite dans le domaine direct d'expression du signal ou dans le domaine de Fourier.

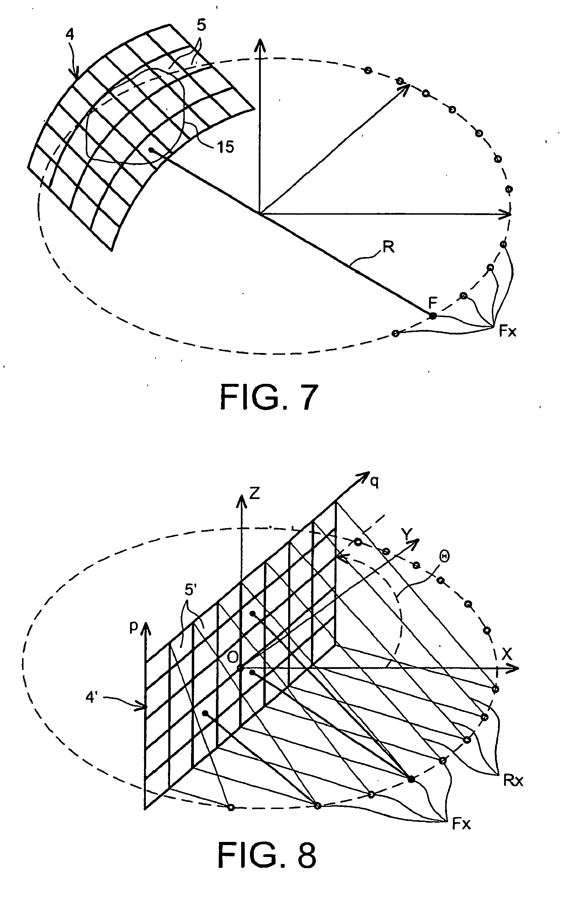

Dans le cas de projections d'un objet examiné sur un réseau généralement bidimensionnel de détecteurs, les projections peuvent être groupées, en jeux bidimensionnels d'après deux de leur coordonnées (en général p et q sur les axes d'un réseau de détecteurs). Toutefois, comme la figure 8 l'illustre, on considère le plus souvent des jeux de projections réarrangées sur un réseau fictif de détecteurs. Dans l'exemple de la figure 8, on regroupe des projections Rx originaires d'un certain nombre de positions Fx successives de la source F du rayonnement, de manière que les projections aboutissant à une même colonne (à q constant) de détecteurs 5' du réseau fictif 4' soient originaires d'une même position Fx, et aussi que les plans de projections soient tous parallèles jusqu'aux positions Fx : on a alors transformé le problème d'une géométrie conique du rayonnement à une géométrie en éventails parallèles dont la résolution et plus simple. De plus, le réseau fictif 4' passe par le centre 0 de rotation et appartient donc au plan de détection Pdet, ce qui facilite aussi les calculs.

L'invention pourrait encore être appliquée à des rencontructions de coupes de l'objet 1 à l'aide d'un réseau monodimensionnel de détecteurs (tous à la même coordonnée p). On pourrait encore appliquer le principe exposé ci-dessus du réarrangement des projections d'une géométrie en éventail plan à géométrie parallèle.

Le traitement des mesures réarrangées se fait en suivant les lignes de détecteurs 5 du réseau fictif 4', successivement pour tous les points.

Un signal peut être décomposé successivement en ondelette pour donner plusieurs niveaux de résultats. Les nouvelles décompositions ne concernent que la portion de l'ondelette qui donnait l'approximation du signal, la portion ou les portions qui donnaient les détails étant préservées.

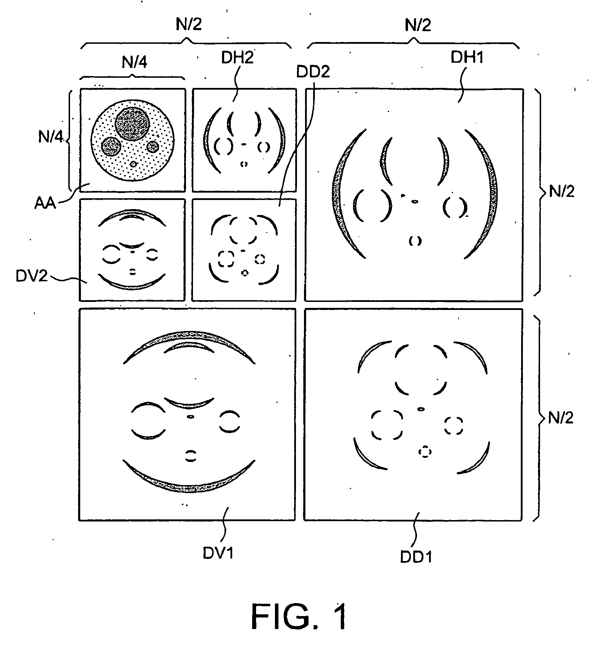

Prenons comme exemple d'objet d'une décomposition en ondelette une image formée de cinq cercles dont un cercle extérieur et quatre cercles de diamètres différents, tous inscrits dans le premier. L'image de départ comprenait n x n points, et si on applique deux fois une décomposition en ondelette de cette image selon le principe précédent, le résultat est donné à la figure 1.

La décomposition en ondelettes de l'image donne un ensemble d'imagettes, dont trois sont plus importantes que les autres, comprenant n/2 x n/2 points chacune, et correspondent aux détails horizontaux, aux détails diagonaux et aux détails verticaux de l'image de départ à grande échelle ; elles sont notées respectivement Dh1, Dd1 et Dv1. Les détails horizontaux de l'image sont obtenus à partir des projections d'angles $\theta$ proche de o ou $\pi$, les détails verticaux à partir des projections d'angles $\theta$ proche de $\pi/2$ ou $3\pi/2$, et les détails diagonaux à partir des projections d'angles intermédiaires avec les conventions de la figure 1. Le reste de l'image est composé de quatre imagettes comprenant n/4 x n/4 points chacune et dont trois sont des imagettes de détails horizontaux, diagonaux et verticaux à plus petite échelle, notées Dh2, Dd2 et Dv2, alors que la dernière imagette est une approximation notée AA de l'image de départ. Si on appelle $\phi$ et $\psi$ les fonctions de décomposition d'une image ou d'une imagette en ondelette, la fonction $\phi$ donnant l'approximation et la fonction $\psi$ les détails, les fonctions à appliquer à l'image de départ pour obtenir la décomposition de la figure 1 sont données par le tableau I.

$$AA : \phi(x_1)\,\phi(x_2)\,\phi\left(\frac{x1}{2}\right)\,\phi\left(\frac{x2}{2}\right)$$

$$Dv2 : \phi(x_1)\,\phi(x_2)\,\phi\left(\frac{x1}{2}\right)\,\Psi\left(\frac{x2}{2}\right),$$

$$Dd2 : \phi(x_1)\,\phi(x_2)\,\Psi\left(\frac{x1}{2}\right)\,\Psi\left(\frac{x2}{2}\right),$$

$$Dh2 : \phi(x_1)\,\phi(x_2) \qquad \Psi\left(\frac{x1}{2}\right) \quad \phi\left(\frac{x2}{2}\right)$$

$$Dv1 : \phi(x_1)\,\Psi(x_2)$$
$$Dd1 : \Psi(x_1)\,\Psi(x_2)$$
$$Dh1 : \Psi(x_1)\,\phi(x_2)$$

L'invention consiste à effectuer la rétroprojection sur chacune des imagettes des jeux de projections décomposées en ondelette et à combiner les imagettes rétroprojetées par une inversion de la disposition en ondelette pour obtenir l'image recherchée. La décomposition en ondelettes est propice à diverses simplifications qui accélèrent beaucoup les calculs. Ces simplifications sont faites entre la décomposition et la combinaison.

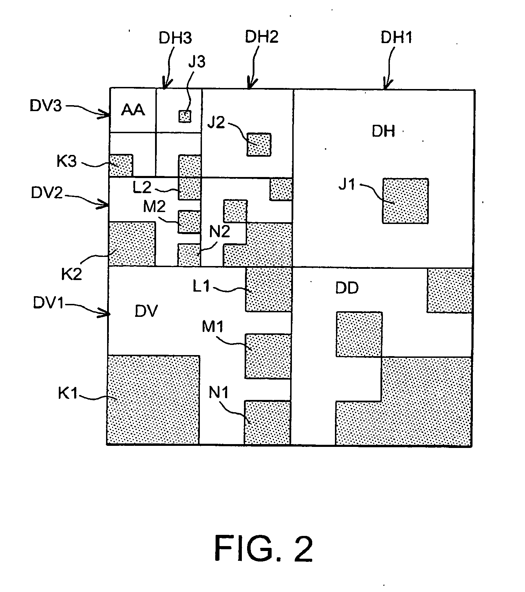

La première d'entre elles concerne des filiations qu'on peut établir entre des détails homologues à des échelles différentes. On considère pour cela des séries d'imagettes donnant des détails de même nature. La figure 2 (qui illustre une décomposition d'une image ressemblant à celle de la figure 1, mais a trois niveaux de décomposition) illustre, pour les trois imagettes des détails horizontaux Dh1, Dh2 et Dh3, des portions homologues J1, J2 et J3 qui occupent la même position et la même superficie relative sur chacune de ces imagettes et se déduisent ainsi l'une de l'autre par une homothétie géométrique dans leurs imagettes.

On peut faire l'hypothèse que, pour la plupart des images rencontrées en pratique (à l'exception notamment des images texturées), si une portion telle que J3 a un contenu insignifiant, c'est-à-dire qui ne révèle rien par rapport aux valeurs significatives de l'imagette, les portions homologues à plus grande échelle, ici J2 et J1, seront elles aussi insignifiantes.

Conformément à l'invention, on commence donc, pour les imagettes des détails, à rétroprojeter les détails à l'échelle la plus petite, puis les détails aux échelles de plus en plus grandes. Un seuil numérique est appliqué aux coefficients de l'ondelette, c'est-à-dire aux valeurs que prend la transformée dans l'imagette considérée. Une valeur inférieure à ce.seuil donné une portion insignifiante, telle que J3. Cependant, les portions insignifiantes des imagettes ne sont pas reconstruites, c'est-à-dire que les calculs de rétroprojection ne sont pas effectués pour elles.

On procède concrètement en construisant un masque numérique avant de rétroprojeter l'imagette. Sur les détails horizontaux Dh, le masque est construit pour la première fois pour l'imagette Dh3. Il prend une valeur égale à 0 pour les portions insignifiantes telles que J3 et égale à 1 ailleurs. Les coefficients du masque se suivent dans un ordre déterminé, par exemple ligne après ligne. Les calculs de rétroprojection sont appliqués sur l'imagette considérée dans l'ordre des coefficients du masque. Quand un coefficient est égal à 0, aucun calcul n'est effectué pour le point correspondant de l'imagette, auquel on attribue une valeur nulle dans l'imagette retro-projetée.

En abordant l'image suivante des détails horizontaux (Dh2), le masque numérique permet de ne pas considérer la portion J2, dont les points ne sont pas traités par l'unité de calcul qui effectue la rétroprojection. Si par exemple le masque de l'imagette Dh3 possède un coefficient nul à la ligne i et la colonne j, on prévoit que les quatre points des lignes 2i et 2i+1, et des colonnes 2j et 2j+1 de l'imagette Dh2 auront aussi des valeurs insignifiantes. Les calculs de rétroprojection ne seront pas effectués pour ces points.

Un masque numérique est ainsi construit pour chaque niveau de décomposition. Le masque décrivant l'imagette Dh2 comprendra par convention des coefficients égaux à 0 pour toute portion homologue à une portion aux coefficients nuls (comme J3) du masque de l'imagette correspondante à plus petite échelle; pour déterminer les valeurs 1 ou 0 des autres points du masque de Dh2, on utilisera encore les comparaisons avec le seuil conventionnel. D'autres portions insignifiantes, ayant des valeurs nulles de masque, pourront apparaître. C'est ce qu'on a illustré sur les imagettes Dv1, Dv2 et Dv3, des décompositions successives des détails verticaux. L'imagette Dv3 comprend une portion insignifiante K3 dont on retrouve les homologues K2 et K1 sur les décompositions à plus grande échelle. L'imagette Dv3 ne comprend, dans cet exemple, aucune autre portion insignifiante, mais il a été possible d'en trouver trois autres, notées L2, M2 et N2, sur l'imagette suivante Dv2. Au niveau de décomposition à plus grande échelle, celui de l'imagette Dv1, on ne s'occupera pas de rétroprojecter les points situés aux portions L1, M1 et N1 homologues de L2, M2 et N2.

On va maintenant examiner d'autres particularités du procédé de l'invention favorables, à une accélération des calculs.

La première repose sur l'égalité entre la transformée de Fourier d'une projection de l'image à un angle fixé et la transformée de Fourier de l'image sur une droite de même angle passant par l'origine.

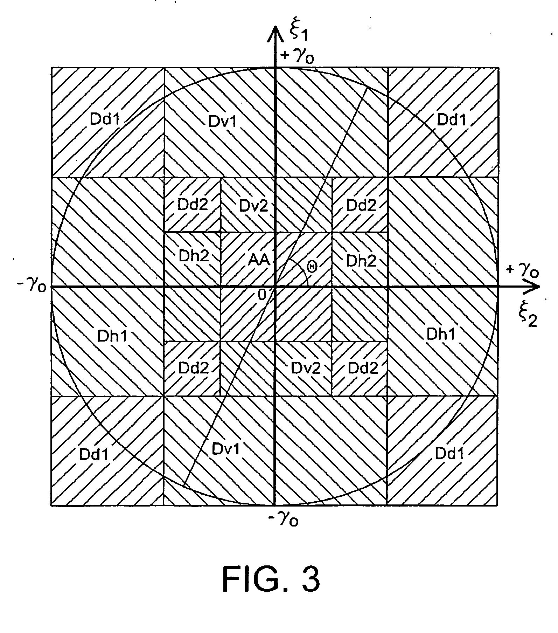

En se reportant à la figure 3, où un jeu de projections à été converti dans le domaine de Fourier pour donner des projections de nature fréquentielle dans le système d'axes notés $\zeta 1$ et $\zeta 2$, le support du jeu de projection dans le domaine de Fourier comprend les valeurs comprises entre $-\nu_0$ et $\nu_0$ pour $\zeta 1$ comme pour $\zeta 2$. Une décomposition en ondelette, comme celle de la figure 1, fait apparaître l'approximation encore notée AA dans les fréquences les plus basses, autour de l'origine $\zeta 1 = \zeta 2 = 0$, alors que les détails se trouvent de part et d'autre de cette approximation, à des fréquences de plus en plus grandes pour les détails à grande échelle.

On a représenté une droite passant par l'origine, en faisant un angle $\theta$ avec l'axe horizontal $\zeta 1$. Cette droite traverse l'approximation AA, ainsi que les imagettes des détails verticaux Dv1 et Dv2. Mais on est assuré que les projections faisant cet angle $\theta$ seront tout à fait inutiles pour les calculs de rétroprojection des détails diagonaux Dd et horizontaux Dh puisque la droite d'angle θ passe à l'écart de leurs imagettes. L'application de l'invention comprend alors une sélection, pour chacune des catégories d'imagettes, des angles de projections qui seront utilisés dans les calculs. Le calcul sur le support des projections est élémentaire.

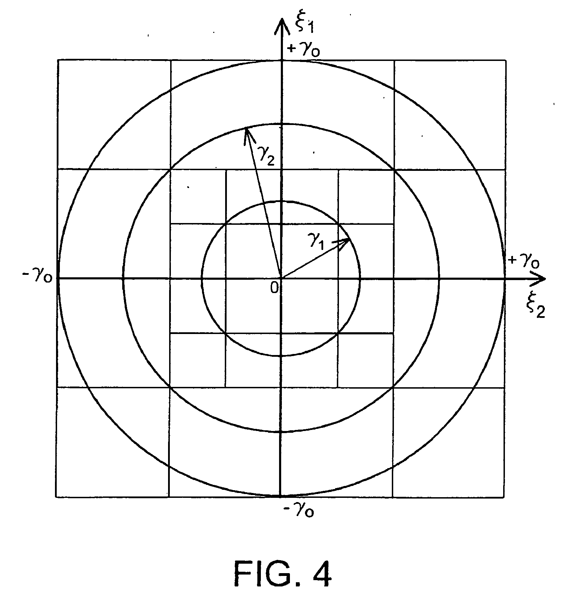

La figure 4 reprend la division d'une image décomposée en ondelette et transposée dans le domaine de Fourier. Une reconstruction parfaite peut être obtenue avec l'emploi d'un nombre déterminé de projections, dépendant de la fréquence (discrétisation) de reconstruction de l'image de l'objet. Ainsi, pour reconstruire l'approximation AA, on peut démontrer qu'il suffira de choisir un nombre de projections, parmi celles qui ont été faites, correspondant à une fréquence maximale ν1 servant de rayon à un cercle circonscrivant la représentation fréquentielle de l'approximation AA dans la décomposition. De même, les détails à petite échelle seront complètement rendus en utilisant un nombre de projections correspondant à la fréquence ν2 dans le cercle ayant ce rayon, dans le système d'axes ζ1, ζ2, et circonscrivant les représentations fréquentielles du groupe de détails Dv2, Dd2 et Dh2 à même échelle. Le support des projections dans le domaine de Fourier permet donc de connaître aisément les fréquences maximales nécessaires pour la rétroprojection parfaite des imagettes respectives.

La mise en oeuvre de l'invention pour exploiter ces deux particularités comprendra donc, à la rétroprojection de chacune des imagettes, une sélection des projections utiles pour cette rétroprojection, en écartant les autres ; et éventuellement une restriction du nombre de projections utiles effectivement exploitées par le calcul pour n'en garder que le nombre utile.

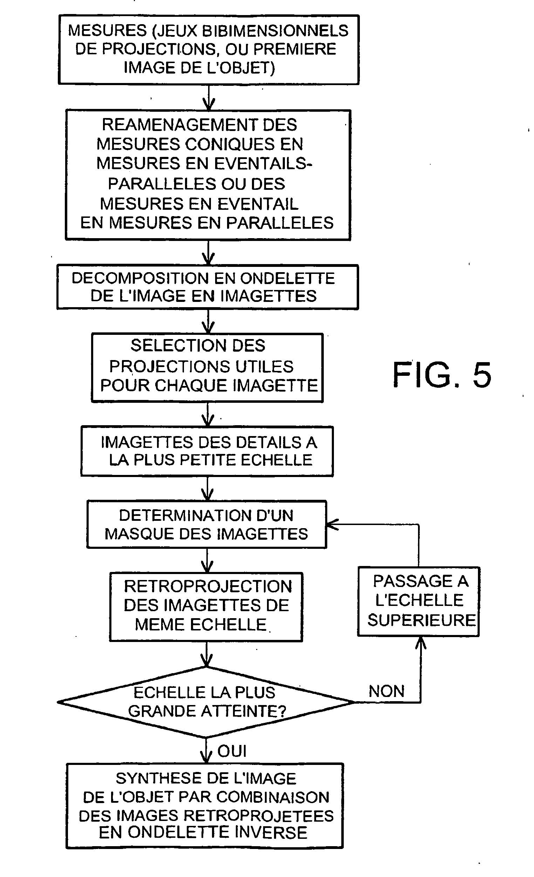

La figure 5 est un organigramme de l'ensemble du procédé décrit ici.

## Revendications

1. Procédé de reconstruction d'une image à partir de jeux de projections de cette image, comprenant successivement :

   - une série de décompositions successives des jeux de projections en ondelette donnant des imagettes des jeux des projections, comprenant des images d'une approximation (AA) et des séries successives (Dd, Dh, Dv) de détails homologues de chaque jeu,
   - dans chacune des séries et successivement pour des imagettes de détails ayant un nombre croissant de points, une recherche de portions insignifiantes jugées pour dépourvues de contenu, et une recherche de portions homothétiques des portions insignifiantes dans chacune des imagettes de détails qui suivent dans la série ;

   - des rétroprojections des imagettes des jeux de protection en imagettes de l'image à reconstruire, avec une omission des rétroprojections pour toutes les portions insignifiantes et toutes les portions homothétiques,
   - et une combinaison des imagettes à reconstruire par une inversion de décomposition donnant ladite image.

2. Procédé de reconstruction d'une image suivant la revendication 1, **caractérisé en ce qu'**il comprend une sélection de régions d'angles (θ) des jeux de projections qui sont utilisés dans les rétroprojections.

3. Procédé de reconstruction d'une image suivant la revendication 2, **caractérisé en ce qu'**il comprend une sélection d'un nombre de projections qui sont utilisées dans la rétroprojections.

4. Procédé de reconstruction d'une image suivant la revendication 2, **caractérisé en ce que** la sélection des régions d'angle est réalisée en fonction d'un support d'une transformée de Fourier des jeux de projections décomposés en ondelette.

5. Procédé de reconstruction d'une image suivant la revendication 3, **caractérisé en ce que** la sélection du nombre de projections est réalisée en fonction de fréquences maximales d'un support d'une transformée de Fourier des jeux de projection décomposés en ondelette.

## Claims

1. A method for reconstructing an image from sets of projections of this image, successively comprising:

   - a series of successive wavelet decompositions of the sets of projections providing thumbnail images of the sets of the projections, comprising images of an approximation (AA) and successive series (Dd, Dh, Dv) of homologous details of each set,
   - in each of the series and successively for the thumbnail images of details having an increasing number of points, a search for insignificant portions estimated to be lacking in content, and a search for homothetic portions of the insignificant portions in each of the thumbnail images of details which follow in the series;
   - back-projections of the thumbnail images of the thumbnail projection sets of the image to be reconstructed, with omission of the back-projections for all the insignificant portions and all the homothetic portions,
   - and a combination of thumbnail images to be reconstructed by decomposition inversion giving said image.

2. The method for reconstructing an image according to claim 1, **characterized in that** it comprises a selection of regions of angles (θ) of the sets of projections which are used in the back-projections.

3. The method for reconstructing an image according to claim 2, **characterized in that** it comprises the selection of a number of projections which are used in the back-projection.

4. The method for reconstructing an image according to claim 2, **characterized in that** the selection of the angle regions is performed according to a support of a Fourier transform of the wavelet decomposed sets of projections.

5. The method for reconstructing an image according to claim 3, **characterized in that** the selection of the number of projections is performed according to the maximum frequencies of a support of a Fourier transform of the wavelet decomposed projection sets.

**Patentansprüche**

1. Verfahren zur Rekonstruktion eines Bildes aus Gruppen von Projektionen dieses Bildes, sukzessiv umfassend:

   - eine Serie sukzessiver Wavelet-Transformationen der Projektionsgruppen, die Bildchen der Projektionsgruppen liefern, die Bilder einer Annäherung (AA) und sukzessive Serien (Dd, Dh, Dv) homologer Details jeder Gruppe umfassen,
   - in jeder der Serien und sukzessive für Detailbildchen mit einer wachsenden Anzahl von Punkten eine Suche von als inhaltslos beurteilter insignifikanter Teile und eine Suche homothetischer Teile der insignifikanten Teile in jedem der Detailbidchen, die in der Serie folgen;
   - Rückprojektionen der Bildchen der Projektionsgruppen als Bildchen des zu rekonstruierenden Bildes, wobei Rückprojektionen aller insignifikanten Teile und aller homothetischen Teile entfallen,
   - und eine Kombination der zu rekonstruierenden Bildchen durch eine das genannte Bild liefernde Transformationsumkehrung.

2. Rekonstruktionsverfahren eines Bildes nach Anspruch 1, **dadurch gekennzeichnet, dass** es eine Selektion von Bereichen von Winkeln (θ) der Projektionsgruppen umfasst, die bei den Rückprojektion benutzt werden.

3. Rekonstruktionsverfahren eines Bildes nach Anspruch 2, **dadurch gekennzeichnet, dass** es eine Selektion einer Anzahl von Projektionen umfasst, die bei der Rückprojektion benutzt werden.

4. Rekonstruktionsverfahren eines Bildes nach Anspruch 2, **dadurch gekennzeichnet, dass** die Selektion der Winkelbereiche als Funktion eines Trägers einer Fourier-Transformation der Wavelettransformierten Projektionsgruppen realisiert ist.

5. Rekonstruktionsverfahren eines Bildes nach Anspruch 3, **dadurch gekennzeichnet, dass** die Selektion der Anzahl von Projektionen als Funktion der Höchstfrequenzen eines Trägers einer Fourier-Transformation der Wavelet-transformierten Projektionsgruppen realisiert ist.

FIG. 1

FIG. 2

FIG. 3

FIG. 4

MESURES (JEUX BIBIMENSIONNELS
DE PROJECTIONS, OU PREMIERE
IMAGE DE L'OBJET)

↓

REAMENAGEMENT DES
MESURES CONIQUES EN
MESURES EN EVENTAILS-
PARALLELES OU DES
MESURES EN EVENTAIL
EN MESURES EN PARALLELES

↓

DECOMPOSITION EN ONDELETTE
DE L'IMAGE EN IMAGETTES

↓

SELECTION DES
PROJECTIONS UTILES
POUR CHAQUE IMAGETTE

**FIG. 5**

↓

IMAGETTES DES DETAILS A
LA PLUS PETITE ECHELLE

↓

DETERMINATION D'UN
MASQUE DES IMAGETTES ←

↓

RETROPROJECTION
DES IMAGETTES DE
MEME ECHELLE.

PASSAGE A
L'ECHELLE
SUPERIEURE

↓                          ↑

ECHELLE LA PLUS
GRANDE ATTEINTE?     NON

↓ OUI

SYNTHESE DE L'IMAGE
DE L'OBJET PAR COMBINAISON
DES IMAGES RETROPROJETEES
EN ONDELETTE INVERSE

FIG. 6

EP 1 559 073 B1

FIG. 7

FIG. 8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2615619
- FR 2810141
- US 5953388 A
- US 5841890 A
- US 6148110 A

**Littérature non-brevet citée dans la description**

- **GRASS.** *Phy. Med.Biol,* Février 2000, vol. 45, 329